(19) Europäisches Patentamt
European Patent Office
Office européen des brevets

(11) **EP 3 383 672 B1**

(12) **EUROPÄISCHE PATENTSCHRIFT**

(45) Veröffentlichungstag und Bekanntmachung des Hinweises auf die Patenterteilung:
**15.07.2020 Patentblatt 2020/29**

(21) Anmeldenummer: **16777553.5**

(22) Anmeldetag: **19.09.2016**

(51) Int Cl.:
***B60C 11/03*** (2006.01)   ***B60C 11/11*** (2006.01)

(86) Internationale Anmeldenummer:
**PCT/EP2016/072090**

(87) Internationale Veröffentlichungsnummer:
**WO 2017/092902 (08.06.2017 Gazette 2017/23)**

(54) **FAHRZEUGLUFTREIFEN**

PNEUMATIC VEHICLE TIRES

PNEUMATIQUE DE VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.12.2015 DE 102015224286**

(43) Veröffentlichungstag der Anmeldung:
**10.10.2018 Patentblatt 2018/41**

(73) Patentinhaber: **Continental Reifen Deutschland GmbH**
**30165 Hannover (DE)**

(72) Erfinder:
• **BROCKMANN, Jürgen**
**30171 Hannover (DE)**
• **DIENSTHUBER, Franz**
**60528 Frankfurt (DE)**
• **SENG, Matthias**
**30453 Hannover (DE)**

(74) Vertreter: **Finger, Karsten**
**Continental Aktiengesellschaft**
**Patente und Lizenzen**
**Postfach 169**
**30001 Hannover (DE)**

(56) Entgegenhaltungen:
**EP-A1- 0 609 195     DE-A1-102011 055 916**
**JP-A- H05 319 023**

**Beschreibung**

Die Erfindung betrifft einen Fahrzeugluftreifen für Personenkraftwagen mit einem Laufstreifen, welcher durch V-förmig verlaufende Diagonalrillen als Hauptrillen laufrichtungsgebunden ausgeführt ist, wobei die Diagonalrillen aus jeder Laufstreifenhälfte mit einem Abschnitt geringfügig über die Umfangsmittellinie des Laufstreifens in die jeweils andere Laufstreifenhälfte verlaufen und hier jeweils in eine Diagonalrille aus der anderen Laufstreifenhälfte münden, sodass Teilbereiche von Profilpositiven aus jeder Laufstreifenhälfte in die andere Laufstreifenhälfte ragen, wobei die Diagonalrillen gemeinsam mit den zwischen ihnen angeordneten Profilpositiven über den Reifenumfang gleichartig gestaltete Profilstrukturen bzw. Pitches bilden, die in zumindest zwei unterschiedlichen Umfangslängen vorgesehen sind, und wobei in jedem Pitch entlang der Umfangsmittellinie des Laufstreifens ein gegenseitiger Versatz der Diagonalrillen eines Pitch vorliegt, welcher der gegenseitige Abstand der beim Abrollen bei Vorwärtsfahrt bei der Umfangsmittellinie zuerst in den Untergrund eintretenden und mit ihrem über die Umfangsmittellinie des Laufstreifens hinaus verlaufenden Abschnitt innerhalb des jeweiligen Pitches befindlichen Diagonalrille zu jener, die nachfolgend in den Untergrund eintritt, ist.

Fahrzeugluftreifen mit derart "mittenübergreifend" ausgestalteten Laufstreifenprofilen, die ansonsten "pseudosymmetrisch" zur Umfangsmittellinie gestaltet sind, das heißt sie weisen gleichartig ausgeführte Profilpositive in den beiden Laufstreifenhälften auf, die in jedem Pich in Umfangsrichtung geringfügig gegeneinander versetzt sind, sind durch den gegenseitigen Versatz in den beiden Laufstreifenhälften unterschiedliche Profilpositivanteile vorhanden. Daraus resultiert vor allem im mittleren Bereich des Laufstreifens eine unterschiedliche Umfangssteifigkeit in den beiden Laufstreifenhälften und eine zusätzliche, das Abrollgeräusch bzw. das Reifen/Fahrbahngeräusch negativ beeinflussende Größe sowie in Abhängigkeit vom Ausmaß der Ungleichheit der Anteile an Profilpositiven auch ein negatives Schub-Zugverhalten.

Bekannte Fahrzeugluftreifen sind in den Patentanmeldungen EP 0609195 A1 und DE 102011055916 A1 beschrieben.

Der Erfindung liegt die Aufgabe zugrunde, bei einem Fahrzeugluftreifen der eingangs genannten Art den Laufstreifen im zentralen Bereich derart auszulegen, dass die Positivanteile in beiden Laufstreifenhälften gleich groß sind.

Gelöst wird die gestellte Aufgabe erfindungsgemäß dadurch, dass der Laufstreifen derart ausgeführt ist, dass der Versatz gemäß folgender Beziehung ermittelt ist und in sämtlichen Pitches gleich groß ist:

$$v = \frac{U}{2 \times n},$$

wobei U der Umfang des Reifens entlang der Umfangsmittellinie in mm und n die Anzahl der Pitches P über den Reifenumfang ist und wobei die maximale Abweichung $\pm$ 2 % der Pitchlänge des kürzesten Pitch beträgt.

Im Rahmen der Erfindung wurde daher festgestellt, dass ein gemäß obiger Beziehung errechneter und in allen Pitches gleich großer Versatz für eine gleichgroße Positivverteilung bzw. gleichgroße Positivanteile in den beiden Laufstreifenhälften sorgt. Gleichgroße Positivanteile sind Voraussetzung dafür, dass der Gürtelverband im Fahrzeugluftreifen unter Betriebsdruck seine "ideale" torusförmige Gestalt annimmt. Ist dies nicht der Fall so würden im zentralen Bereich des Laufstreifens Profilpositive mit größerem Positiv gegenüber solchen mit kleinerem Positiv "abgesenkt" sein. Erfindungsgemäß ausgeführte Fahrzeugluftreifen weisen daher nicht nur ein geringeres Abrollgeräusch auf, sondern auch einen besonders gleichmäßigen Laufstreifenabrieb und ein ausgeglichenes Schub-Zugverhalten.

Weitere Merkmale, Vorteile und Einzelheiten der Erfindung werden nun anhand der schematischen Zeichnung, die ein Ausführungsbeispiel darstellt, näher beschrieben.

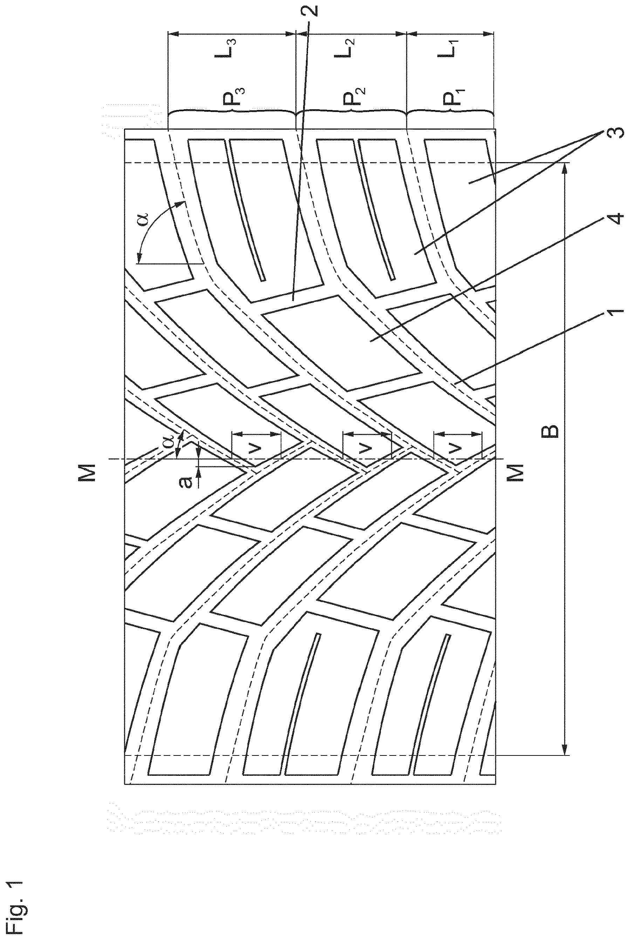

Dabei zeigt die einzige Figur Fig. 1, eine Draufsicht auf eine Teilabwicklung eines Laufstreifens eines Fahrzeugluftreifens.

Der in Fig. 1 gezeigte Laufstreifen ist für Fahrzeugluftreifen von Personenkraftwagen, Vans oder dergleichen vorgesehen und laufrichtungsgebunden ausgeführt. Mit M-M ist die Umfangsmittellinie des Reifens, mit B ist die Breite des bodenberührenden Teils des Laufstreifens bezeichnet, also jene Breite, über welche der Reifen beim Abrollen mit dem Untergrund in Kontakt tritt. Der bodenberührende Teil des Laufstreifen entspricht dem statisch ermittelten Footprint gemäß E.T.R.T.O.-Standards (Last bei 70 % der Tragfähigkeit bei einem Innendruck von 2,5 bar, Innendruck 85 % von 2,5 bar).

Beim dargestellten Ausführungsbeispiel ist der Laufstreifen über seine Breite B mit V-förmig verlaufenden Diagonalrillen 1 versehen und durch zwischen benachbarten Diagonalrillen 1 verlaufende Umfangsrillen 2 in schulterseitige Profilblöcke 3 und in im mittleren Bereich des Laufstreifens angeordnete mittige Profilblöcke 4 gegliedert. Die Diagonalrillen 1 sind die Hauptrillen des Laufstreifens und verlaufen im zentralen Bereich des Laufstreifens, im Bereich ihrer hier verlaufenden Endabschnitte unter einem Winkel $\alpha \leq 60°$, bei der gezeigten Ausführung von etwa 35°, zur Umfangsrichtung. In Richtung zu den Laufstreifenrändern wird der Winkel $\alpha$ zunehmend größer, sodass die Diagonalrillen 1 zwischen den schulterseitigen Profilblöcken 3 unter einem Winkel α von 70° bis 90° zur Umfangsrichtung verlaufen. Die in der einen Laufstreifenhälfte verlaufenden Diagonalrillen 1 sind gegenüber jenen, die in der anderen Laufstreifenhälfte verlaufen, in Umfangsrichtung etwas versetzt, wobei im zentralen Bereich des Laufstreifens die Diagonalrillen 1 ineinander münden. Dabei erstrecken sich die Diagonalrillen 1 jeweils über die Umfangsmittellinie M-M hinaus und münden in einem in axialer Richtung ermittelten Abstand a von der Mittellinie M-M jeweils in eine der in der anderen Laufstreifenhälfte verlaufenden und ebenfalls über die Mittellinie M-M hinaus verlaufenden Diagonalrille 1. Der Abstand a variiert in Abhängigkeit von der jeweiligen Pitchlänge, wie noch beschrieben wird. Der Abstand a beträgt je nach Auslegung des Verlaufs der Diagonalrillen 1 3 % bis 10 % der Laufstreifenbreite B.

In bekannter Weise weisen ferner die Diagonalrillen 1 im Laufstreifenzentrum eine geringere Breite auf als schulterseitig, wobei die Breite vom zentralen Bereich in Richtung Laufstreifenränder zumindest im Wesentlichen kontinuierlich größer wird. Die Breite der Diagonalrillen 1 variiert ferner auch mit der jeweiligen Pitchlänge, wie noch beschrieben wird. In jeder Laufstreifenhälfte sind ferner zwischen in Umfangsrichtung benachbarten Diagonalrillen 1 jeweils zwei mittige Profilblöcke 4 vorgesehen, wobei in Folge des beschriebenen Verlaufs der Endabschnitte der Diagonalrillen 1 über die Mittellinie M-M hinaus kleine Teilbereiche mittiger Profilblöcke 4, welche bei der gezeigten Ausführung sind diese in Draufsicht dreieckig sind, jeweils in der anderen Laufstreifenhälfte liegen.

Ein Reifen mit dem durch den Verlauf der Diagonalrillen 1 laufrichtungsgebunden ausgeführten Laufstreifen ist derart am Fahrzeug zu montieren, dass die laufstreifeninnenseitigen Enden der Diagonalrillen 1 beim Abrollen des Reifens bei Vorwärtsfahrt zuerst in den Untergrund eintreten.

Die Profilstrukturen, demnach bei der gezeigten Ausführung die Profilblöcke 3, 4 und die Diagonalrillen 1, sind, um ein unauffälliges und möglichst geringes Abrollgeräusch sicherzustellen, nach einem Verfahren der Pitchlängenvariation geräuschoptimiert ausgelegt. Dazu bilden in bekannter Weise diese Profilstrukturen sogenannte Pitches - gleichartig ausgeführte, sich über den Umfang des Laufstreifens wiederholende Profilstrukturen unterschiedlicher Umfangslängen. Wie bekannt werden die Pitches über den Reifenumfang gemäß einer sogenannten Pitchfolge angeordnet, die rechnerisch ermittelt wird, wobei die Gesamtanzahl der Pitches über den Reifenumfang bei einem PKW-Reifen in der Größenordnung von 65 bis 90 beträgt. In einer solchen Pitchfolge können an manchen Stellen des Reifenumfanges zwei oder mehr Pitches gleicher Umfangslänge aufeinander folgen.

Bei der in Fig. 1 dargestellten Ausführungsvariante sind drei Pitches $P_1$, $P_2$ und $P_3$ vorgesehen, ihre an den Rändern der Bodenaufstandsfläche vorliegenden, unterschiedlichen Umfangslängen sind mit $L_1$, $L_2$ und $L_3$ bezeichnet. Das Pitch $P_1$ weist die geringste Umfangslänge $L_1$ auf, das Pitch $P_3$ die größte Umfangslänge $L_3$, das Pitch $P_2$ weist eine Umfangslänge $L_2$ auf, die zwischen der längsten und der kürzesten Umfangslänge $L_1$, $L_3$ liegt. Die Pitchgrenzen verlaufen bei der gezeigten Ausführungsvariante jeweils entlang der Mittellinien der Diagonalrillen 1. Zu jedem Pitch $P_1$, $P_2$ und $P_3$ gehören daher vier mittige Profilblöcke 4 und in jeder Reifenschulter je eine schulterseitiger Profilblock 3. Bei einer möglichen Ausführungsvariante der Erfindung beträgt die Pitchlänge $L_1$ des kürzesten Pitch $P_1$ 23 mm bis 26 mm, die Pitchlänge $L_2$ des mittleren Pitch $P_2$ 28 mm bis 32 mm und die Pitchlänge $L_3$ des längsten Pitch $P_3$ 34 mm bis 38 mm.

Infolge des Verlaufes der Diagonalrillen 1 im zentralen Bereich handelt es sich beim dargestellten Laufstreifenprofil um ein sogenanntes "mittenübergreifendes", bezüglich der Mittellinie M-M "pseudosymmetrisches" Profil mit einer geradzahligen Blockanzahl, hier sechs, über der Reifenbreite in jedem Pitch $P_1$, $P_2$ und $P_3$. Bei Laufstreifen mit Diagonalrillen 1 und Profilblöcken 4, die jeweils im zentralen Bereich mittenübergreifend angeordnet sind, war es bislang wegen der aus Geräuschgründen vorgesehene Pitchlängenvariation nicht möglich, in den beiden Laufstreifenhälften gleichgroße Positivanteile sicherzustellen.

Im Rahmen der Erfindung wurde nun festgestellt, dass ein in allen Pitches $P_1$, $P_2$, $P_3$ gleichgroßer Versatz v der zu einem Pitch bestimmter Umfangslänge gehörenden Diagonalrillen 1 entlang der Umfangsmittellinie M-M für eine gleiche Positivverteilung in den beiden Laufstreifenhälften sorgt. Der Versatz wird entlang der Umfangsmittellinie MM als gegenseitiger Abstand der beim Abrollen des Reifens bei Vorwärtsfahrt zuerst in den Untergrund eintretenden Diagonalrille 1 zu jener, die nachfolgend in den Untergrund eintritt, ermittelt. Bei der dargestellten Ausführung entspricht dieser Versatz dem gegenseitigen Abstand der entlang der Mittellinien der Diagonalrillen 1 verlaufenden Pitchgrenzen. Dieser Versatz v in mm wird wie folgt errechnet:

$$v = \frac{L_1 \times n_1 + L_2 \times n_2 + \cdots}{2 \times (n_1 + n_2 + \cdots)} = \frac{U}{2 \times n}$$

mit v als Versatz in mm,
$L_1$, $L_2$, ...: Pitchlängen in mm,
$n_1$: Anzahl der Pitches $P_1$ mit der Pitchlänge $L_1$ über den Reifenumfang,
$n_2$: Anzahl der Pitches $P_2$ mit der Pitchlänge $L_2$ über den Reifenumfang,
$n_3$, $n_4$.....: Anzahl der Pitches $P_3$, $P_4$,.... mit der Pitchlänge $L_3$, $L_4$,.....über den Reifenumfang,
n: Gesamtanzahl sämtlicher Pitches über den Reifenumfang,

U: Umfang des Reifens entlang der Umfangsmittellinie M-M in mm, ermittelt am nicht montierten Neureifen.

Von diesem optimalen Versatz v sollte die Abweichung höchstens ± 2 % der kleinsten Pitchlänge betragen.

Die Pitchgrenzen können ferner anders als dargestellt verlaufen, beispielsweise wie es ebenfalls üblich ist, entlang einer der Begrenzungslinien der Diagonalrillen 1.

Die Erfindung ist auf Fahrzeugluftreifen anwendbar, deren Profilstrukturen im Laufstreifen in zumindest zwei Pitches unterschiedlicher Pitchlängen angeordnet sind, wobei üblicherweise bis zu fünf Pitches mit unterschiedlichen Pitchlängen vorgesehen sind.

## Bezugsziffernliste

| | |
|---|---|
| 1 ...................... | Diagonalrille |
| 2 ...................... | Umfangsrille |
| 3 ...................... | schulterseitiger Profilblock |
| 4 ...................... | mittiger Profilblock |
| a...................... | Abstand |
| B...................... | Laufstreifenbreite |
| $L_1, L_2, L_3$ .......... | Pitchlänge |
| M-M ................. | Umfangsmittellinie |
| $P_1, P_2, P_3$ ........... | Pitch |
| v ...................... | Versatz |
| α ...................... | Winkel |

## Patentansprüche

1.  Fahrzeugluftreifen für Personenkraftwagen mit einem Laufstreifen, welcher durch V-förmig verlaufende Diagonalrillen (1) als Hauptrillen laufrichtungsgebunden ausgeführt ist, wobei die Diagonalrillen (1) aus jeder Laufstreifenhälfte mit einem Abschnitt geringfügig über die Umfangsmittellinie des Laufstreifens in die jeweils andere Laufstreifenhälfte verlaufen und hier jeweils in eine Diagonalrille (1) aus der anderen Laufstreifenhälfte münden, sodass Teilbereiche von Profilpositiven aus jeder Laufstreifenhälfte in die andere Laufstreifenhälfte ragen, wobei die Diagonalrillen (1) gemeinsam mit den zwischen ihnen angeordneten Profilpositiven über den Reifenumfang gleichartig gestaltete Profilstrukturen bzw. Pitches ($P_1, P_2, P_3$) bilden, die in zumindest zwei unterschiedlichen Umfangslängen vorgesehen sind, und wobei in jedem Pitch ($P_1, P_2, P_3$) entlang der Umfangsmittellinie (M-M) des Laufstreifens ein gegenseitiger Versatz (v) der Diagonalrillen (1) eines Pitch ($P_1, P_2, P_3$) vorliegt, welcher der gegenseitige Abstand der beim Abrollen bei Vorwärtsfahrt bei der Umfangsmittellinie (M-M) zuerst in den Untergrund eintretenden und mit ihrem über die Umfangsmittellinie des Laufstreifens hinaus verlaufenden Abschnitt innerhalb des jeweiligen Pitches ($P_1, P_2, P_3$) befindlichen Diagonalrille (1) zu jener, die nachfolgend in den Untergrund eintritt, ist,
    **dadurch gekennzeichnet,**
    **dass** der Laufstreifen derart ausgeführt ist, dass der Versatz v in mm gemäß folgender Beziehung ermittelt ist und in sämtlichen Pitches ($P_1, P_2, P_3$) gleich groß ist:

$$v = \frac{U}{2 \times n}$$

wobei U der Umfang des Reifens entlang der Umfangsmittellinie in mm und n die Anzahl der Pitches $P_i$ über den Reifenumfang ist und wobei die maximale Abweichung ± 2 % der Pitchlänge des kürzesten Pitch beträgt.

## Claims

1.  Pneumatic vehicle tyre for motor cars, comprising a directional tread formed by diagonal grooves (1) that run in a V-shape as main grooves, wherein a portion of the diagonal grooves (1) from each tread half runs slightly over the circumferential central line of the tread into the respective other tread half and in each case merges there with a diagonal groove (1) from the other tread half, such that sub-regions of positive profiles protrude out of each tread half into the other tread half, wherein the diagonal grooves (1) together with the positive profiles arranged between them form identically designed profile structures or pitches ($P_1$, $P_2$, $P_3$) over the tyre circumference, which are provided in at least two different circumferential lengths, and wherein, in each pitch ($P_1$, $P_2$, $P_3$) along the circumferential central line (M-M) of the tread, there is a mutual offset (v) of the diagonal grooves (1) of a pitch ($P_1$, $P_2$, $P_3$), which is the mutual distance between the diagonal groove (1) which first arrives at ground level at the circumferential central line (M-M) when rolling during forward travel, and has its portion that runs over the circumferential central line of the tread within the respective pitch ($P_1$, $P_2$, $P_3$), and the diagonal groove which next arrives at ground level,

**characterized**

**in that** the tread is designed such that the offset v is determined in mm according to the following relationship and is the same size in all of the pitches ($P_1$, $P_2$, $P_3$) :

$$v = \frac{U}{2 \times n} \text{,}$$

where U is the circumference of the tyre along the circumferential central line in mm and n is the number of pitches $P_i$ over the tyre circumference and where the maximum deviation is $\pm 2\%$ of the pitch length of the shortest pitch.

**Revendications**

1. Pneumatique de véhicule pour véhicules de tourisme, comprenant une bande de roulement qui est réalisée de manière associée à la direction de roulement par des rainures diagonales (1) en tant que rainures principales, s'étendant en forme de V, les rainures diagonales (1) s'étendant depuis chaque moitié de la bande de roulement avec une portion légèrement au-delà de l'axe médian périphérique de la bande de roulement dans l'autre moitié respective de la bande de roulement et débouchant à cet endroit à chaque fois dans une rainure diagonale (1) provenant de l'autre moitié de la bande de roulement, de telle sorte que des régions partielles de parties profilées positives de chaque moitié de la bande de roulement pénètrent dans l'autre moitié de la bande de roulement, les rainures diagonales (1) formant ensemble, avec les parties profilées positives disposées entre elles, des structures profilées ou des pas ($P_1$, $P_2$, $P_3$) configurés de manière identique sur la périphérie du pneu, lesquels sont prévus dans au moins deux longueurs périphériques différentes, et un décalage mutuel (v) des rainures diagonales (1) d'un pas ($P_1$, $P_2$, $P_3$) existant dans chaque pas ($P_1$, $P_2$, $P_3$) le long de l'axe médian périphérique (M-M) de la bande de roulement, lequel décalage est la distance mutuelle entre la rainure diagonale (1) pénétrant en premier dans le sol lors du roulement en marche avant au niveau de l'axe médian périphérique (M-M) et se trouvant avec sa portion s'étendant au-delà de l'axe médian périphérique de la bande de roulement à l'intérieur du pas respectif ($P_1$, $P_2$, $P_3$), et la rainure diagonale suivante qui pénètre dans le sol,

**caractérisé en ce que**

la bande de roulement est réalisée de telle sorte que le décalage v en mm soit déterminé selon la formule suivante et soit identique pour tous les pas ($P_1$, $P_2$, $P_3$) :

$$v = U / (2 \times n)$$

U étant la périphérie du pneu le long de l'axe médian périphérique en mm et n étant le nombre de pas $P_i$ sur la périphérie du pneu et l'écart maximal étant de +- 2 % de la longueur de pas du pas le plus court.

Fig. 1

**IN DER BESCHREIBUNG AUFGEFÜHRTE DOKUMENTE**

**In der Beschreibung aufgeführte Patentdokumente**

- EP 0609195 A1
- DE 102011055916 A1